# EUROPÄISCHE PATENTSCHRIFT

(11) **EP 2 309 904 B1**
(45) Veröffentlichungstag und Bekanntmachung des Hinweises auf die Patenterteilung: **29.05.2019**
(21) Anmeldenummer: 09781193.9
(22) Anmeldetag: 28.07.2009
(51) Int. Cl.: A47J 43/07

(54) **GEHÄUSE FÜR EIN HAUSHALTSGERÄT, INSBESONDERE EINEN STABMIXER, UND HAUSHALTSGERÄT**
HOUSING FOR A HOUSEHOLD DEVICE, ESPECIALLY A HAND BLENDER, AND HOUSEHOL DEVICE
BOITIER POUR UN APPAREIL ELECTROMENAGER, NOTAMMENT MELANGEUR A MAIN, ET L'APPAREIL ELECTROMENAGER

(30) Priorität: 01.08.2008 DE 102008040933
(43) Veröffentlichungstag der Anmeldung: 20.04.2011
(73) Patentinhaber: BSH Hausgeräte GmbH, 81739 München (DE)
(72) Erfinder: DANIJEL, Roman, 3312 Ljubno (SI); GOLAVSEK, Samo, 3312 Prebold (SI); POGACAR, Toni, 3311 Sempeter (SI); SEMEJA, Uros, 3327 Smartno ob Paki (SI)
(86) Internationale Anmeldenummer: PCT/EP2009/059745
(87) Internationale Veröffentlichungsnummer: WO 2010/012732

(56) Entgegenhaltungen:
- EP-A1- 1 728 457
- WO-A1-02/03842
- US-A- 5 368 384
- US-A1- 2002 009 016
- US-A1- 2005 058 018
- US-A1- 2006 049 166

## Beschreibung

### Hintergrund der Erfindung

Die Erfindung betrifft ein Gehäuse für ein Haushaltsgerät, insbesondere einen Stabmixer, welches zumindest bereichsweise entlang seiner Längserstreckung in mindestens zwei Funktionseinrichtungen des Haushaltsgeräts aufnehmende Schalen geteilt ist, sowie ein damit ausgestattetes Haushaltsgerät. Sie betrifft außerdem ein Verfahren zum Herstellen einer dekorierten Blende für das Gehäuse eines Haushaltsgeräts.

### Stand der Technik

Ein Gehäuse der eingangs genannten Art ist aus der Patentschrift US 5,368,384 bekannt. Das dort offenbarte Gehäuse ist für ein Haushaltsgerät in Form eines Stabmixers vorgesehen und aus mehreren Bauteilen zusammengefügt. Der in Gebrauchsstellung obere Teil des Gehäuses ist vertikal entlang seiner Längserstreckung in eine erste und eine zweite Schale geteilt, die Funktionseinrichtungen des Stabmixers aufnehmen, insbesondere den elektrischen Antrieb sowie die Platinen für die elektronischen Gerätekomponenten. Nach unten schließt sich ein hülsenartiges Gehäuseteil an, an das der Schaft und das glockenförmige Fußteil angeformt sind. Die obere Stirnfläche des Gehäuses wird randseitig von aufeinander zu laufenden Bereich der Schalen gebildet. Diese formen mittig eine Ausnehmung aus, die mittels einer randseitig von den Schalen übergriffenen Blende verschlossen wird, wobei im Übergang zwischen den Schalen und der Blende Schlitze für die Durchführung der Betätigungen eines Schiebeschalters vorgesehen sind.

Ein weiteres Gehäuse für einen Stabmixer wird in der europäischen Patentschrift EP 1 529 471 B1 abgebildet. Das Gehäuse weist mehrere in Längsrichtung wie auch zirkulär verlaufende Kanten auf und ist zum lösbaren Anbau des Schafts eines Mixwerkzeugs vorgesehen. Ein entlang der Längserstreckung des Gehäuses verlaufender Bereich ist dabei zur Aufnahme von Betätigungseinrichtungen ausgebildet, mittels derer die Drehzahl des elektrischen Antriebs verändert und das Mixwerkzeug vom Gehäuse entkoppelt werden können.

In der europäischen Patentschrift EP 0 925 010 B1 ist ferner ein Gehäuse für einen Stabmixer abgebildet, welches eine Anzahl um die Mantelfläche umlaufende Kanten aufweist.

Die zuvor beschriebenen Gehäuse sind grundsätzlich zur Verwendung in Haushaltsgeräten, vorzugsweise in Handmixern, insbesondere Stabmixern, geeignet. Bei einer Beschädigung der Gehäuseoberfläche, beispielsweise durch Kratzer, Sprünge oder dergleichen, sind jedoch stets Gehäuseteile auszutauschen oder zumindest zu öffnen, die Funktionselemente des Haushaltsgeräts tragen. Darüber hinaus müssen die tragenden Gehäuseteile auch zur Veränderung der Anmutung des Geräts modifiziert werden, wodurch die Flexibilität hinsichtlich des Designs derartiger Geräte einschränkt wird. Außerdem muss bei einer Änderung der Gehäuseoptik stets beachtet werden, ob die dabei zur Anwendung kommenden Materialien und Herstellverfahren die Festigkeitseigenschaften der die Funktionselemente aufnehmenden Gehäuseteile negativ beeinflussen.

WO02/03842 offenbart den Oberbegriff des Anspruchs 1.

### Der Erfindung zugrundeliegende Aufgabe

Der Erfindung liegt die Aufgabe zugrunde, ein gattungsgemäßes Gehäuse so weiterzuentwickeln, dass die Designvielfalt verbessert und die Instandsetzung vereinfacht werden. Außerdem liegt der Erfindung die Aufgabe zugrunde, ein verbessertes Verfahren zum Herstellen einer dekorierten Blende für das Gehäuse eines Haushaltsgeräts bereitzustellen.

### Erfindungsgemäße Lösung

Die der Erfindung zugrunde liegende Aufgabe wird bei einem gattungsgemäßen Gehäuse durch die Merkmale des Anspruchs 1 gelöst. Die Blendenanordnung muss also nicht dazu vorgesehen werden, den elektrischen Antrieb oder Getriebekomponenten des Haushaltsgeräts zu lagern und die im Betrieb auftretenden Kräfte aufzunehmen. Die Auswahl der Werkstoffe und Herstellverfahren der Blendenanordnung kann sich deshalb insbesondere an den gewünschten optischen und/oder haptischen Eigenschaften des Haushaltsgeräts orientieren, beispielsweise an einem besonderen Oberflächendekor, einem besonders hohen Glanz oder einer funktionell und optisch vorteilhaften Oberflächenstruktur. Die Schalen des Gehäuses hingegen können aus Werkstoffen gefertigt werden, welche insbesondere hinsichtlich ihrer mechanischen Eigenschaften Vorzüge aufweisen, beispielsweise aus glasfaserverstärktem Polyamid oder Polypropylen, die sich durch Spritzgießen zu mechanisch belastbaren, innerlich mit komplexen Aufnahmen versehenen Gehäuseschalen verarbeiten lassen.

Die Fixierung der mindestens einen die Blendenanordnung bildenden Blende kann beispielsweise durch Formschluss, zum Beispiel Verrasten oder Verschrauben, mit der betreffenden Schale erfolgen. Damit ist grundsätzlich ein Entfernen der Blende möglich, ohne dass die Lagerung der Funktionseinrichtungen angetastet werden muss. Auch bei einer stoffschlüssigen Verbindung, insbesondere Verkleben, der Blenden mit der zugeordneten Schale ist zumindest eine schnelle Adaption der Fertigung an das zu liefernde Design möglich.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Mit Vorteil ist vorgesehen, dass die Blendenanordnung die zugeordnete Schale zumindest bereichsweise überdeckt. In diesem Bereich ist das Gehäuse nach der Montage der Blendenanordnung also doppelwandig ausgebildet, so dass auch vor Aufsetzen der Blenden oder nach deren Entnahme die Funktionseinrichtungen von mechanisch belastbaren Gehäusekomponenten zumindest im Wesentlichen umschlossen sind. Eine Verschmutzung der Funktionseinrichtungen oder ein unerwünschter Eingriff in das Gehäuseinnere werden hierdurch vermieden.

Besonders bevorzugt ist ein Gehäuse, bei welchem sich eine erste Blende über wesentliche Bereiche einer ersten Schale erstreckt. Die Einflussnahme der Blendenanordnung auf das Erscheinungsbild des Haushaltsgeräts wird hierdurch besonders groß. Dies gilt insbesondere dann, wenn sich die erste Blende im Wesentlichen über die gesamte Längserstreckung der zugeordneten ersten Schale erstreckt.

Nach einer weiteren vorteilhaften Ausführung der Erfindung ist vorgesehen, dass sich eine zweite Blende über wesentliche Bereiche einer Stirnseite des Gehäuses erstreckt, wobei die erste Schale mit Vorteil eine einstückige Anformung für die Stirnseite aufweist. Hierdurch wird der Montageaufwand für die Funktionseinrichtungen aufnehmenden Gehäuseteile nicht erhöht, aber dennoch die Variabilität hinsichtlich der Gehäuseanmutung verbessert. So ist beispielsweise vorstellbar, die erste und zweite Blende optisch oder haptisch verschieden auszuführen. Auch eine Demontage der Blendenanordnung wird durch einen solchen mehrteiligen Aufbau erleichtet.

Weiterhin kann bevorzugt vorgesehen werden, dass die erste Blende und/oder die zweite Blende mit Ausnehmungen für die Aufnahme mindestens einer dritten Blende versehen sind. Mit besonderem Vorteil sind die Ausnehmungen in der ersten und zweiten Blende dabei randoffen und ineinander übergehend ausgebildet, so dass die dritte Blende randseitig vollständig von der übrigen Blendenanordnung umschlossen und optisch integriert wird. Die dritte Blende ist dabei vorzugsweise zur Aufnahme und/oder Durchführung von Betätigungs- und/oder Anzeigeeinrichtungen ausgebildet und kann auf ihrer Außenseite mit farblich oder strukturell abgesetzten Hinweisen zur Funktion der Betätigungs- und/oder Anzeigeeinrichtungen (Schalter, Drehknöpfe, LEDs oder dergleichen) versehen werden.

Vorteilhaft ist ferner ein Gehäuse, bei welchem der Außenumfang der dritten Blende nach Montage der Blendenanordnung vom Innenumfang der Ausnehmungen in der ersten und/oder zweiten Blende überdeckt wird, so dass für die Ausrichtung und/oder Befestigung der dritten Blende keine gesonderten Mittel vorgesehen werden müssen.

Auf besonders einfache Weise können Ausrichtung und Befestigung dadurch erfolgen, dass der Außenumfang der dritten Blende in Richtung der ersten Schale stufenförmig verbreitert ausgebildet ist. Ferner ist bevorzugt vorgesehen, dass die Übergänge zwischen den die Blendenanordnung bildenden Blenden nach Montage flächenbündig ausgeführt sind, wodurch die Reinigung des Haushaltsgeräts vereinfacht und ein besonders gefälliges Aussehen hervorgerufen werden.

Vorzugsweise ist die Blendenanordnung zumindest teilweise, z.B. die erste und/oder die zweite Blende der Blendanordnung, nach dem erfindungsgemäßen Verfahren hergestellt. In einer bevorzugten Ausführung der Erfindung sind alle Teile der Blendenanordnung nach dem erfindungsgemäßen Verfahren hergestellt.

Bei dem erfindungsgemäßen Herstellverfahren erfolgt das Bedrucken der Folie vorzugsweise durch Siebdruck und/oder unter Verwendung einer Wasserdrucktechnologie (Waterprint Technology). Bei dem anschließenden Tiefziehen wird die Folie vorzugsweise bereits in ihre endgültige Form gebracht. Hierdurch können vorteilhaft auch Blendenformen gestaltet werden, die zumindest bereichsweise eine hohe Krümmung aufweisen. Durch das anschließende Beschneiden der Ränder kann ein exakter und scharfer Rand geschaffen werden. Insbesondere kann ein Überstehen der Folie nach dem Hinterspritzen vermieden werden und so unter anderem auch einem späteren Lösen der Folie von dem hinterspritzen Kunststoff entgegengewirkt werden. Durch den Schritt des Hinterspritzens, vorzugsweise im Spritzgießverfahren, kann vorteilhaft die Steifigkeit der Blende erhöht werden. Außerdem kann die Blende durch das Hinterspritzen mit Verbindungselementen ausgestattet werden, um sie an einer Gehäuseschale zu befestigen.

Alternativ oder zusätzlich zu dem erfindungsgemäßen Verfahren kann wenigstens ein Teil der Blendenanordnung, z.B. die erste und/oder die zweite Blende, auf ihrer Außenseite bedruckt, foliert, und/oder auf sonstige Weise beschichtet sein. Darüber hinaus kann wenigstens ein Teil der Blendenanordnung, z.B. die erste und/oder die zweite Blende, unter Zuhilfenahme der IML-Technologie (Injection Mold Layering) hergestellt werden.

Geeignete Materialien für spritzgegossene bzw. hinterspritze Teile Blendenanordnung sind unter anderem Polypropylen (PP), Acrylnitril-Butadien-Styrol (ABS) und Polycarbonat (PC) in Verbindung mit transparentem ABS. Die Folie ist vorzugsweise eine Kunststofffolie, z.B. aus einem der vorgenannten Materialien oder aus Polyvinylchlorid (PVC).

Das bevorzugte Haushaltsgerät ist ein Mixer, vorzugsweise ein Handmixer, insbesondere ein Mixstab.

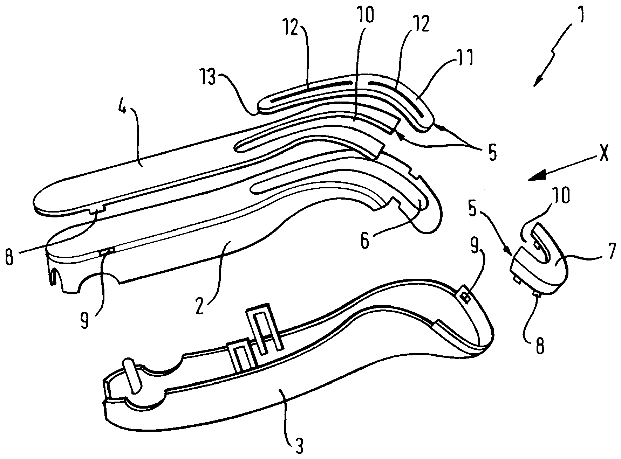

### Kurzbeschreibung der Figur

Die Erfindung wird im Folgenden anhand einer schematischen Zeichnung an einem Ausführungsbeispiel mit weiteren Einzelheiten näher erläutert. Die Zeichnung stellt eine perspektivische Explosionszeichnung der Gehäusekomponenten für einen erfindungsgemäß ausgestatteten Stabmixer dar.

### Ausführliche Beschreibung der Erfindung anhand eines Ausführungsbeispiels

Das in der Figur gezeigte Gehäuse 1 für einen Stabmixer ist entlang seiner Längserstreckung (Pfeil X) längsgeteilt ausgebildet und umfasst als wesentliche mechanisch tragende Komponenten eine erste Schale 2 und eine zweite Schale 3. In Gebrauchsstellung wäre das Gehäuse vertikal ausgerichtet, wobei der Pfeil X nach unten weisen würde.

An dem in der Figur linken Ende des Gehäuses 1 ist eine Kupplungseinrichtung für das Werkzeug des Stabmixers vorgesehen. Zu diesem Zweck weisen die Schalen 2, 3 entsprechende Ausnehmungen auf. Die Schalen 2, 3 sind im Bereich ihrer inneren Mantelflächen ferner mit verschiedenen Anformungen ausgestattet, welche der Aufnahme und Lagerung der Funktionseinrichtungen des Stabmixers, insbesondere von elektrischem Antrieb und Getriebe, dienen. Die Funktionseinrichtungen werden bei der Montage des Stabmixers üblicherweise zunächst in eine Schale 3 eingefügt und nach dem Aufsetzen der anderen Schale 2 in ihrer Lage gesichert. Da die Schalen 2, 3 die Funktionseinrichtungen im Wesentlichen umschließen, ist ein Eingriff in das Gehäuseinnere auch vor dem Anbringen oder nach dem Entfernen der nachfolgend beschriebenen Blendenanordnung 5 nicht möglich oder zumindest erheblich erschwert.

Auf die Schale 2 ist eine erste Blende 4 einer Blendenanordnung 5 aufsetzbar, welche sich über wesentliche Bereiche der ersten Schale 2 erstreckt, insbesondere nahezu vollständig über deren Längserstreckung (Pfeil X). An die erste Schale 2 ist ferner die in Gebrauchsstellung obere Stirnfläche 6 des Gehäuses 1 einstückig angeformt, welche in weiten Bereichen von einer zweiten Blende 7 überdeckt wird. Die Befestigung der ersten Blende 4 und der zweiten Blende 7 an der Schale 2 erfolgt durch aus den Blenden 4, 7 auskragende Rastfüßen 8, welche in komplementäre Aufnahmen 9 in der Schale 2 einrastbar sind.

Die erste Blende 4 und die zweite Blende 7 sind jeweils mit randoffenen Ausnehmungen 10 versehen, welche sich in Längserstreckung (Pfeil X) des Gehäuses 1 oder, im Bereich der Stirnfläche 6, senkrecht dazu erstrecken und nach der Montage des Gehäuses 1 ineinander über gehenden angeordnet sind. Hierdurch wird eine Aufnahme für eine dritte, in Richtung der Längserstreckung (Pfeil X) bogenförmig gekrümmte Blende 11 geschaffen, welche zum Anbringen und/oder Durchführungen von Betätigungs- und/oder Anzeigeeinrichtungen vorgesehen ist, beispielsweise von Schiebereglern oder LED-Anzeigen. Die dritte Blende 11 weist zu diesem Zweck entsprechende Durchbrüche 12 auf.

Nach dem Fügen der Schalen 2, 3 wird im nächsten Montageschritt die dritte Blende 11 mit ihren Betätigungs- und/oder Anzeigeeinrichtungen mechanisch und/oder elektrisch mit den von den Schalen 2, 3 umschlossenen Funktionseinrichtungen verbunden. Dies kann beispielsweise mittels einer vorzugsweise steckbaren Kabelverbindung oder durch eine direkte Steckverbindung erfolgen.

Der Außenumfang 13 der dritten Blende 11 ist in Richtung der Schale 2 stufenförmig erweitert, wobei die erste und zweite Blende 4, 7 im Bereich der Ausnehmung 10 auf den Schmalbereich dieser Erweiterung aufsetzbar sind und die dritte Blende 11 nach der Montage ausrichten und in Richtung der ersten Schale 2 spannen. Die dritte Blende 11 muss aus diesem Grund nicht mit gesonderten Befestigungsmitteln zur Fixierung an der Schale 2 versehen werden.

Nach der Montage des Gehäuses 1 sind die Schalen 2, 3 sowie die Blenden 4, 7, 11 der Blendenanordnung 5 an ihren außenliegenden Übergängen zueinander flächenbündig angeordnet. Hierdurch erhält das Gehäuse 1 ein besonders gefälliges Aussehen. Ferner wird die Reinigung der Gehäuseoberfläche erleichtert.

Die erste 4 und die zweite Blende 7 umfassen jeweils eine im Siebdruckverfahren von hinten berduckte Folie, die zu Stabilitätszwecken mit Kunststoff hinterspritzt ist. Zur Herstellung wird die Folie jeweils zuerst bedruckt und dann durch Tiefziehen in ihre endgültige Form gebracht, wobei die bedruckte Seite der Folie die Seite ist, die bei angebrachte Blende 4, 7 nach innen zeigt. Die Folie wird anschließend auf ihre endgültige Größe beschnitten und dann in eine Spritzgussform eingelegt. Dort wird sie im Spritzgussverfahren mit Kunststoff hinterspritzt.

Die in der vorstehenden Beschreibung, den Ansprüchen und der Zeichnung offenbarten Merkmale können sowohl einzeln als auch in beliebiger Kombination für die Verwirklichung der Erfindung in ihren verschiedenen Ausgestaltungen von Bedeutung sein.

### Bezugszeichen

1 Gehäuse
2 (erste) Schale
3 (zweite) Schale
4 (erste) Blende
5 Blendenanordnung
6 Stirnfläche
7 (zweite) Blende
8 Rastfuß
9 Aufnahme
10 Ausnehmung
11 (dritte) Blende
12 Durchbruch
13 Außenumfang (der Blende 11)

## Patentansprüche

1. Gehäuse (1) für ein Haushaltsgerät, welches zumindest bereichsweise entlang seiner Längserstreckung in mindestens zwei Funktionseinrichtungen des Haushaltsgeräts aufnehmende Schalen (2, 3) geteilt ist, wobei auf wenigstens eine Schale (2) außenseitig zumindest bereichsweise eine Blendenanordnung (5) aufgesetzt ist, **dadurch gekennzeichnet, dass** sich eine erste Blende (4) über wesentliche Bereiche einer ersten Schale (2) erstreckt, wobei die erste Blende (4) und eine zweite Blende (7) mit Ausnehmungen (10) für die Aufnahme mindestens einer dritten Blende (11) versehen sind und die Ausnehmungen (10) in der ersten und zweiten Blende (4, 7) randoffen ausgebildet sind.

2. Gehäuse nach Anspruch 1, **dadurch gekennzeichnet, dass** die Blendenanordnung (5) die zugeordnete Schale (2) zumindest bereichsweise überdeckt.

3. Gehäuse nach Anspruch 1, **dadurch gekennzeichnet, dass** sich die erste Blende (4) im Wesentlichen über die gesamte Längserstreckung der zugeordneten ersten Schale (2) erstreckt.

4. Gehäuse nach einem der Ansprüche 1 bis 3, **dadurch gekennzeichnet, dass** sich die zweite Blende (7) über wesentliche Bereiche einer Stirnseite (6) des Gehäuses (1) erstreckt.

5. Gehäuse nach Anspruch 4, **dadurch gekennzeichnet, dass** die erste Schale (2) eine einstückige Anformung für die Stirnseite (6) aufweist.

6. Gehäuse nach Anspruch 1, **dadurch gekennzeichnet, dass** die Ausnehmungen (10) nach Montage der ersten und zweiten Blende (4, 7) ineinander übergehend vorgesehen sind.

7. Gehäuse nach Anspruch 1, **dadurch gekennzeichnet, dass** die dritte Blende (11) zur Aufnahme und/oder Durchführung von Betätigungs- und/oder Anzeigeeinrichtungen ausgebildet ist.

8. Gehäuse nach Anspruch 1, **dadurch gekennzeichnet, dass** der Außenumfang (13) der dritten Blende (11) nach Montage vom Innenumfang der Ausnehmungen (10) in der ersten und/oder zweiten Blende (4, 7) überdeckt wird.

9. Gehäuse nach Anspruch 8, **dadurch gekennzeichnet, dass** der Außenumfang (13) der dritten Blende (11) in Richtung der ersten Schale (2) stufenförmig verbreitert ausgebildet ist.

10. Gehäuse nach einem der vorhergehenden Ansprüche, **dadurch gekennzeichnet, dass** die Übergänge zwischen den die Blendenanordnung (5) bildenden Blenden (4, 7, 11) nach Montage flächenbündig ausgeführt sind.

11. Haushaltsgerät mit einem Gehäuse (1) nach einem der vorhergehenden Ansprüche.

## Claims

1. Housing (1) for a domestic appliance, which at least in regions along its longitudinal extent is divided into at least two shells (2, 3) accommodating functional devices of the domestic appliance, wherein a panel arrangement (5) is mounted externally on at least one shell (2), at least in regions, **characterised in that** a first panel (4) extends over significant portions of a first shell (2), wherein the first panel (4) and a second panel (7) are provided with recesses (10) for accommodating at least a third panel (11) and the recesses (10) in the first and second panel (4, 7) are embodied such that they are open at the side.

2. Housing according to claim 1, **characterised in that** the panel arrangement (5) covers the assigned shell (2) at least in regions.

3. Housing according to claim 1, **characterised in that** the first panel (4) essentially extends over the whole longitudinal extent of the assigned first shell (2).

4. Housing according to one of claims 1 to 3, **characterised in that** the second panel (7) extends over significant areas of a front face (6) of the housing (1).

5. Housing according to claim 4, **characterised in that** the first shell (2) has a one-piece formation for the front face (6).

6. Housing according to claim 1, **characterised in that** the recesses (10) after assembly of the first and second panels (4, 7) are provided in a merging form.

7. Housing according to claim 1, **characterised in that** the third panel (11) is embodied for accommodating and/or leading through actuation and/or display devices.

8. Housing according to claim 1, **characterised in that** after assembly the outer periphery (13) of the third panel (11) is covered by the inner periphery of the recesses (10) in the first and/or second panel (4, 7).

9. Housing according to claim 8, **characterised in that** the outer periphery (13) of the third panel (11) is embodied in widened, stepped form in the direction of the first shell (2).

10. Housing according to one of the preceding claims, **characterised in that** after assembly the transitions between the panels (4, 7, 11) forming the panel arrangement (5) are embodied in a flush manner.

11. Domestic appliance with a housing (1) according to one of the preceding claims.

## Revendications

1. Boîtier (1) pour un appareil électroménager, lequel est divisé au moins par zones le long de son étendue longitudinale en au moins deux coques (2, 3) accueillant des dispositifs fonctionnels de l'appareil électroménager, dans lequel un agencement de masques (5) est posé côté externe au moins par zones sur au moins une coque (2), **caractérisé en ce qu'**un premier masque (4) s'étend sur des zones principales d'une première coque (2), dans lequel le premier masque (4) et le deuxième masque (7) sont dotés d'évidements (10) pour le logement d'au moins un troisième masque (11) et les évidements (10) sont réalisés ouverts sur les bords dans le premier et le deuxième masque (4, 7).

2. Boîtier selon la revendication 1, **caractérisé en ce que** l'agencement de masques (5) recouvre au moins par zones la coque (2) associée.

3. Boîtier selon la revendication 1, **caractérisé en ce que** le premier masque (4) s'étend principalement sur l'étendue longitudinale totale de la première coque (2) associée.

4. Boîtier selon l'une des revendications 1 à 3, **caractérisé en ce que** le deuxième masque (7) s'étend sur des zones principales d'une face avant (6) du boîtier (1).

5. Boîtier selon la revendication 4, **caractérisé en ce que** la première coque (2) présente une conformation d'un seul tenant pour la face avant (6).

6. Boîtier selon la revendication 1, **caractérisé en ce que** les évidements (10) sont prévus pour passer l'un dans l'autre après le montage du premier et du deuxième masque (4, 7).

7. Boîtier selon la revendication 1, **caractérisé en ce que** le troisième masque (11) est réalisé pour le logement et/ou la mise en oeuvre de dispositifs d'actionnement et/ou d'affichage.

8. Boîtier selon la revendication 1, **caractérisé en ce que** la périphérie externe (13) du troisième masque (11) est recouverte après le montage par la périphérie interne des évidements (10) dans le premier et/ou le deuxième masque (4, 7).

9. Boîtier selon la revendication 8, **caractérisé en ce que** la périphérie externe (13) du troisième masque (11) est réalisée de manière élargie et étagée dans la direction de la première coque (2).

10. Boîtier selon l'une des revendications précédentes, **caractérisé en ce que** les transitions entre les masques formant l'agencement de masques (5) sont réalisées de manière affleurante après le montage.

11. Appareil électroménager avec un boîtier (1) selon l'une des revendications précédentes.
